**Europäisches Patentamt**

**European Patent Office**

**Office européen des brevets**

(19)

(11) Veröffentlichungsnummer : **0 146 532**
**B1**

(12)                      EUROPÄISCHE PATENTSCHRIFT

(45) Veröffentlichungstag der Patentschrift :
**15.03.89**

(21) Anmeldenummer : **84890247.4**

(22) Anmeldetag : **17.12.84**

(51) Int. Cl.⁴ : **F 01 M 11/10, F 01 M 11/02,
F 01 M 1/18, F 01 M 11/04**

(54) Verfahren zur Steuerung des Schmiersystems von Brennkraftmaschinen, und Vorrichtung zur Durchführung des Verfahrens.

(30) Priorität : **15.12.83 AT 4361/83**

(43) Veröffentlichungstag der Anmeldung :
**26.06.85 Patentblatt 85/26**

(45) Bekanntmachung des Hinweises auf die Patenterteilung : **15.03.89 Patentblatt 89/11**

(84) Benannte Vertragsstaaten :
**CH DE FR GB IT LI NL SE**

(56) Entgegenhaltungen :
**DE–A– 2 336 522
DE–A– 2 442 746
DE–A– 3 228 195
DE–A– 3 239 185
GB–A–   867 711
GB–A– 2 084 667
US–A– 2 641 277
US–A– 4 091 894**

(73) Patentinhaber : **Van der Meulen, Alfred
Koloman Wallischgasse 27
A-8605 Kapfenberg (AT)**

(72) Erfinder : **Van der Meulen, Alfred
Koloman Wallischgasse 27
A-8605 Kapfenberg (AT)**

(74) Vertreter : **Boeckmann, Peter, Dipl.-Ing. et al
Patentanwälte Dipl.-Ing. Peter Boeckmann, Dipl.-Ing.
Leo Brauneiss Strohgasse 10
A-1030 Wien (AT)**

## Beschreibung

Die Erfindung betrifft ein Verfahren zur Steuerung des Schmiersystems von Brennkraftmaschinen, insbesondere von Einspritzbrennkraftmaschinen, wobei das Schmiermittel im Kreislauf aus einem Sammelsystem, beispielsweise einer Ölwanne, mittels einer Pumpe über wenigstens einen Filter den Schmierstellen der Brennkraftmaschine zugeführt und von dort in den Sammenraum zurückgeleitet wird, wobei die Menge des Schmiermittels an zumindest einer Stelle des Schmiermittelkreislaufes ermittelt und der ermittelte Wert einer Steuerungseinrichtung eingegeben wird, über welche die Zufuhr von neuem Schmiermittel gesteuert wird, und wobei verbrauchtes Schmiermittel aus dem Schmiermittelkreislauf entnommen und zunächst gesammelt und dann dem Kraftstoff (im folgenden auch Brennstoff- bezeichnet) der Brennkraftmaschine beigemengt wird. Ferner betrifft die Erfindung eine Vorrichtung zur Durchführung eines solchen Verfahrens.

Bei Einspritzbrennkraftmaschinen, welche zum Antrieb von Kraftfahrzeugen, also beispielsweise von Lastkraftwagen oder Omnibussen, verwendet werden, ist es bereits bekannt, das Schmiermittel von einer Ölwanne über eine Kreislaufleitung mittels einer Schmiermittelpumpe den Schmierstellen der Brennkraftmaschine zuzuführen, von wo das überschüssige Schmiermittel wieder in die Ölwanne abfließt. An den Schmierstellen gelangen Fremdstoffe in das Schmiermittel, beispielsweise durch Metallabrieb der sich relativ zueinander bewegenden Teile der Brennkraftmaschine, welche Fremdstoffe ausgeschieden werden müssen. Es ist daher bereits bekannt, in der Kreislaufleitung einen Filter anzuordnen, in dem feste Fremdstoffe bis zu einer Größenordnung von etwa 1 µ ausgeschieden werden. Es ist auch bekannt, zum Entfernen der festen Fremdstoffe aus dem Schmiermittel einen Zentrifugalabscheider vorzusehen.

. Bei verschiedenen bekannten Brennkraftmaschinen ist neben einem Hauptstromfilter ein Nebenstromfilter vorgesehen, um eine bessere Ausscheidung der Fremdstoffe zu erzielen und um bei fehlerhafter Funktion eines Filters einen Maschinenschaden zu verhindern.

Durch die Ausscheidung der festen Fremdstoffe wird die Lebensdauer des Schmiermittels erhöht.

Beim Schmiervorgang werden dem Schmiermittel aber auch Bestandteile beigemengt, welche nicht ausgefiltert werden können, beispielsweise kleinste feste Partikel, vor allem aber auch flüssige Bestandteile, wie beispielsweise Treibstoffbestandteile. Außerdem erfolgt durch Wärmeeinwirkung, wie sie beim Betrieb der Brennkraftmaschine immer auftritt, eine chemische Umwandlung bzw. Zersetzung des Schmiermittels, wodurch die Schmierfähigkeit beeinträchtigt wird.

Das Schmiermittel muß daher nach einer bestimmten Verwendungsdauer ausgewechselt werden. Das Auswechseln des Schmiermittels erfolgte bisher in vorgegebenen Intervallen, beispielsweise bei Brennkraftmaschinen für Kraftfahrzeuge nach einer bestimmten Kilometerleistung oder bei stationären Brennkraftmaschinen nach einer bestimmten Betriebsdauer.

Aus der GB-A-2 084 667 ist zum Auswechseln des Schmiermittels bei einer Einspritz-Brennkraftmaschine eines Lastkraftwagens eine Vorrichtung bekannt geworden, die einen Impulsgeber aufweist, der gleichzeitig mit dem Zündsystem eingeschaltet wird und der periodisch Impulse aussendet. Durch diese Impulse werden Ventile betätigt, welche in einer das Schmiermittel führenden Leitung und einer Kraftstoffleitung eingeschaltet sind, und deren Öffnungs- und Schließbewegungen so gesteuert werden, daß in vorbestimmten Zeitintervallen immer eine gewisse Schmiermittelmenge dem in der Kraftstoffrückführungsleitung oder im Kraftstofftank befindlichen Kraftstoff beigemengt wird. Der Austausch einer vorgegebenen Menge an Schmiermittel erfolgt somit bei dieser bekannten Anordnung periodisch und somit in der Regel nicht in dem für die Erneuerung des Schmiermittels optimalen Zeitpunkt, denn die Abnützung des Schmiermittels, also dessen Schmierfähigkeit, hängt nicht nur von der Betriebsdauer ab, sondern auch noch von zahlreichen anderen Faktoren, die bei dieser bekannten Anordnung unberücksichtigt bleiben.

Außerdem weist diese bekannte Anordnung den Nachteil auf, daß das aus dem Schmiermittelkreislauf entnommene und in einem Kolbenraum gesammelte Schmiermittel unkontrolliert dem Kraftstoff beigemengt wird. Es wird dadurch ein mit Schmiermittel versetzter Kraftstoff auch dann der Brennkraftmaschine zugeführt, wenn sich aus dieser Zufuhr Schwierigkeiten ergeben, also beispielsweise beim Starten und im Leerlauf.

Des weiteren findet beim Betrieb der Brennkraftmaschine immer ein gewisser Verbrauch von Schmiermittel statt, einerseits durch eine Verbrennung von Schmiermittel im Zylinderraum, andererseits durch ein Austreten von Schmiermittel an undichten Stellen. Es muß daher bei den bekannten Maschinen in gewissen Zeitabschnitten der Schmiermittelstand kontrolliert und gegebenenfalls Schmiermittel nachgefüllt werden. Hiezu schlägt die erwähnte GB-A-2 084 667 vor, die Menge des in der Ölwanne der Brennkraftmaschine befindlichen Schmiermittels mittels eines Sensors zu messen und den gemessenen Wert einer Steuerungseinrichtung zuzuführen, über welche ein Ventil gesteuert wird, das in einer von einem Schmiermitteltank zur Ölwanne führenden Schmiermittelzuführungsleitung angeordnet ist. Dadurch erfolgt bei einem Absinken des Schmiermittelpegels in der Ölwanne, das auch die bereits erwähnte Entnahme einer bestimmten Schmiermittelmenge zum Zwecke des Austausches des Schmiermittels bewirkt, automatisch die Zufuhr von neuem unverbrauchtem Schmiermittel. Die Steuerungseinrichtung, welche in Abhängigkeit von der Menge des in der Ölwanne befindlichen Schmiermittels die Zufuhr von neuem Schmiermittel steuert, arbeitet hiebei unabhängig vom erwähnten Impulsgeber, über welchen in vorbestimmten Zeitintervallen eine Teilmenge des Schmiermittels aus dem Schmiermittelkreislauf entnommen wird.

Es ist Aufgabe der vorliegenden Erfindung, ein Verfahren zur Steuerung des Schmiersystems von Brennkraftmaschinen zu schaffen, welches eine umweltfreundliche Verbrennung des zu beseitigenden verbrauchten Schmiermittels beim Betrieb der Brennkraftmaschine sicherstellt und nachteilige Auswirkungen bei dieser Verbrennung vermeidet. Zur Lösung dieser Aufgabe schlägt die Erfindung vor, daß das über die Steuerungseinrichtung entnommene und gesammelte verbrauchte Schmiermittel dem Kraftstoff der Brennkraftmaschine beigemengt wird, wenn das Brennstoffpedal betätigt und/oder eine bestimmte Drehzahl erreicht ist. Dadurch wird eine Zufuhr von mit verbrauchtem Schmiermittel vermengten Kraftstoff zur Brennkraftmaschine während des Leerlaufes ausgeschlossen, wo eine unvollständige Verbrennung des Kraftstoffes und damit ein Entweichen von unverbranntem Schmiermittel in die Atmosphäre auftreten kann. Bei einer Steuerung in Abhängigkeit von der Drehzahl wird eine Zufuhr von mit Schmiermittel vermengtem Kraftstoff zur Brennkraftmaschine auch beim Starten verhindert, wodurch Startschwierigkeiten vermieder werden können.

Das entnommene verbrauchte Schmiermittel wird zweckmäßig in den mit der Kraftstoffzuführungsleitung verbundenen Luftansaugstutzen eingesprüht. Dadurch erfolgt eine umweltfreundliche Verbrennung des in kleinste Partikel zerteilten verbrauchten Schmiermittels in den Zylinderräumen der Brennkraftmaschine.

Wie bereits erwähnt, ist der Zeitpunkt, zu welchem ein zumindest teilweiser Austausch von verbrauchtem Schmiermittel zu erfolgen hat, nicht nur von der Kilometerleistung abhängig, sondern auch von zahlreichen anderen Faktoren. Um daher eine optimale Ausnützung des Schmiermittels sicherzustellen, kann gemäß einem weiteren Merkmal der Erfindung der Druck des Schmiermittels an zumindest einer Stelle im Schmiermittelkreislauf gemessen werden, wobei der gemessene Wert in die Steuerungseinrichtung eingegeben wird. Wird der Steuerungseinrichtung ein Druckabfall signalisiert, so kann dies nicht nur einen natürlichen Verbrauch von Schmiermittel bedeuten, sondern dieser Druckabfall kann auch durch ein undichtes Schmiermittelsystem, eine defekte Schmiermittelpumpe, einen nicht mehr funktionierenden Filter sowie abgenutzte Kolbenringe hervorgerufen werden. Die, zweckmäßig elektronische, Steuerungseinrichtung kann hiebei nicht nur eine Zufuhr von unverbrauchtem Schmiermittel veranlassen, sondern beispielsweise bei plötzlichem Druckabfall als Folge einer plötzlich auftretenden undichten Stelle im Schmiermittelsystem, einer nicht mehr arbeitenden Schmiermittelpumpe od. dgl. eine Alarmeinrichtung auslösen, welche einen weiteren Betrieb der Brennkraftmaschine verhindert.

Das erfindungsgemäße Verfahren ermöglicht es weiters, einen gezielten Austausch zumindest eines Teiles des Schmiermittels vorzunehmen und zwar zu einem Zeitpunkt, wo eine ausreichende Schmiereigenschaft des Schmiermittels nicht mehr gegeben ist. Diese Schmiereigenschaft hängt insbesondere auch ab von der verbrauchten Kraftstoffmenge pro Zeiteinheit, von der Betriebsdauer und von der abgegebenen Leistung der Brennkraftmaschine. Nach einem weiteren Verfahrensschritt werden daher die verbrauchte Kraftstoffmenge pro Zeiteinheit und/oder die Betriebsdauer und/oder die abgegebene Leistung der Brennkraftmaschine gemessen und es werden die gemessenen Werte zusätzlich in die Steuerungseinrichtung eingegeben. Die Messung der verbrauchten Kraftstoffmenge pro Zeiteinheit kann beispielsweise mittels eines Durchflußmengenmessers erfolgen. Alle diese Werte beeinflussen die Lebensdauer des Schmiermittels, so daß diese Werte einen Hinweis dafür geben, wann ein Schmiermittelaustausch erfolgen muß.

Weiters kann erfindungsgemäß eine die Zusammensetzung, insbesondere den Schwefelgehalt, des verwendeten Kraftstoffes charakterisierende Größe in die Steuereinrichtung eingegeben werden. Alle Eingaben können beispielsweise durch Einstellung eines Potentiometers am Eingang eines die Steuerungseinrichtung bildenden Mikroprozessors vorgenommen werden. Die Treibstoffqualität, insbesondere der Schwefelgehalt des Treibstoffes, beeinflussen die Lebensdauer des Schmiermittels sehr stark, da Schwefel die Additive im Schmiermittel zerstört. Es kann also beispielsweise der verwendete Treibstoff hinsichtlich seiner Güte in drei Qualitätsstufen eingeteilt werden, welche über ein dreistufiges Potentiometer in die Steuerungseinrichtung eingegeben werden.

Weiters hängt natürlich die Lebensdauer des Schmiermittels von der Zusammensetzung, insbesondere von der Legierung desselben ab. Unlegiertes Schmieröl weist eine wesentlich geringere Lebensdauer auf als ein hochwertiges bzw. hochlegiertes Schmieröl. Es ist daher zweckmäßig, auch eine die Zusammensetzung, insbesondere die Legierung, des Schmiermittels charakterisierende Größe in die Steuerungseinrichtung einzugeben. Auch hier kann beispielsweise das Schmiermittel in drei Qualitätsstufen eingeteilt werden, welche über ein dreistufiges Potentiometer in die Steuerungseinrichtung eingegeben werden können.

Schließlich ist es von Vorteil, wenn bei Verwendung der Brennkraftmaschine für den Antrieb eines Kraftfahrzeuges die die äußeren Betriebsbedingungen des Kraftfahrzeuges charakterisierenden Werte, wie Betriebsart, Ladegewicht und/oder Beschaffenheit der befahrenen Fläche, in die Steuerungseinrichtung eingegeben werden, da auch hievon die Lebensdauer des Schmiermittels abhängt. Diese Lebensdauer wird beispielsweise maßgeblich dadurch beeinflußt, ob die Brennkraftmaschine im Dauerbetrieb arbeitet oder nur kurzzeitig in Betrieb genommen wird und häufig gestartet wird, ob die Brennkraftmaschine am Rande ihrer Leistungsfähigkeit arbeitet oder nicht und ob das Kraftfahrzeug auf normalen Straßen oder im Geländeverkehr eingesetzt wird.

Die erfindungsgemäße Vorrichtung, bei welcher die Ölwanne einer Brennkraftmaschine über eine Kreislaufleitung, in der eine Schmiermittelpumpe und wenigstens ein Filter angeordnet sind, mit den Schmierstellen der Brennkraftmaschine verbunden ist, von wo das Schmiermittel zu Ölwanne zurückfließt, die über eine Schmiermittelzuführungsleitung mit einem ein neues Schmiermittel enthaltenden Schmiermitteltank verbunden ist, in welcher Schmiermittelzuführungsleitung ein von einer Steuerungseinrichtung gesteuertes Absperrorgan vorgesehen ist, welche Steuerungseinrichtung mit einer Mengenmeßeinrichtung in der Ölwanne, vorzugsweise mittels eines elektrischen Kabels, in Wirkverbindung steht, wobei weiters eine Schmiermittelabführungsleitung, in der gleichfalls ein Absperrorgan vorgesehen ist, mit der Brennstoffzuführung zur Brennkraftsmaschine in Verbindung steht, und wobei in der Schmiermittelabführungsleitung ein Zwischenbehälter und in Förderrichtung nach dem Zwischenbehälter eine Förderpumpe vorgesehen sind, ist im wesentlichen dadurch gekennzeichnet, daß die Förderpumpe von einem Drehzahlmesser der Brennkraftmaschine und/oder vom Brennstoffpedal derart gesteuert ist, daß erst bei Betätigung des Brennstoffpedals und/oder erst nach Erreichen einer bestimmten Drehzahl die Förderpumpe eingeschaltet wird.

Vom Vorteil ist es hiebei, wenn die Steuerungseinrichtung auch das in der Schmiermittelabführungsleitung angeordnete Absperrorgan steuert.

Zweckmäßig ist es weiters, wenn in der Kreislaufleitung eine Druckmeßeinrichtung und/oder eine Durchflußmengenmeßeinrichtung vorgesehen sind, welche Meßeinrichtungen, vorzugsweise mittels elektrischer Kabel, mit der Steuerungseinrichtung in Wirkverbindung stehen, so daß diese Steuerungseinrichtung auch vom in der Kreislaufleitung gemessenen Druck und von der gemessenen Durchflußmenge in der Kreislaufleitung beeinflußt wird.

Weiters ist es von Vorteil, wenn eine Einrichtung zur Messung des Treibstoffverbrauches der Brennkraftmaschine pro Zeiteinheit und/oder eine Einrichtung zur Messung der Betriebsdauer der Brennkraftmaschine und/oder eine Einrichtung zur Messung der von der Brennkraftmaschine abgegebenen Leistung vorgesehen sind, und daß diese Einrichtungen über die Meßwerte übertragende Leitungen mit der Steuerungseinrichtung verbunden sind.

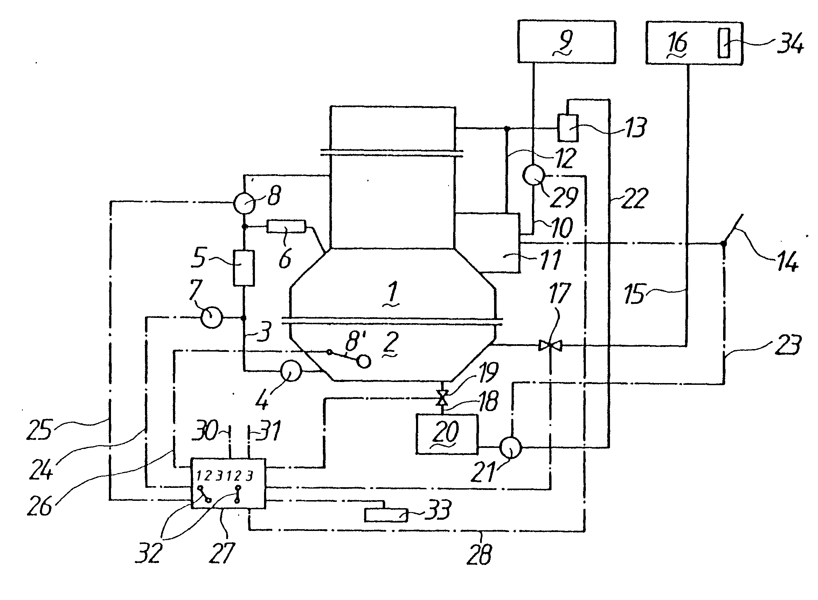

Weitere Merkmale der erfindungsgemäßen Vorrichtung ergeben sich aus der folgenden Beschreibung eines in der Zeichnung schematisch dargestellten Ausführungsbeispieles.

Mit 1 ist eine Einspritzbrennkraftmaschine bezeichnet, die mit einer Ölwanne 2 versehen ist, in welcher sich das Schmiermittel befindet. Dieses Schmiermittel wird über eine Kreislaufleitung 3, in die eine Schmiermittelpumpe 4 eingeschaltet ist, zu den einzelnen Schmierstellen der Brennkraftmaschine 1 geführt. Für die Absonderung der festen Brennstoffe sind ein Hauptstromfilter 5 und ein Nebenstromfilter 6 vorgesehen, es genügt jedoch auch die Anordnung des Hauptstromfilters 5 allein.

Die Kreislaufleitung 3 steht mit einer Druckmeßeinrichtung 7 in Verbindung, die den Schmiermitteldruck mißt. Ferner ist in der Kreislaufleitung 3 eine Durchflußmengenmeßeinrichtung 8 vorgesehen. Schließlich kann in der Ölwanne 2 eine Mengenmeßeinrichtung 8' angeordnet sein, welche den Schmiermittelstand in der Ölwanne 2 mißt.

Der Brennstoff zum Betrieb der Brennkraftmaschine 1 gelangt von einem Brennstoffbehälter 9 über eine Brennstoffzuführung 10 zur Einspritzpumpe 11 und von dort über die Einspritzleitung 12 zu den einzelnen Einspritzdüsen. 13 stellt das mit der Einspritzleitung 12 verbundene Luftfilter dar. Die Einspritzmenge wird in üblicher Weise durch das Brennstoffpedal 14 geregelt.

Die Ölwanne 2 ist über eine Schmiermittelzuführungsleitung 15 mit einem frisches Schmiermittel enthaltenden Schmiermitteltank 16 verbunden. In der Schmiermittelzuführungsleitung 15 ist ein Absperrorgan 17 angeordnet. Ferner ist die Ölwanne 2 über eine Schmiermittelabführungsleitung 18, in welcher ein Absperrorgan 19 eingeschaltet ist, mit einem Zwischensbehälter 20 verbunden, in welchem das verbrauchte, über die Schmiermittelabführungsleitung 18 abgeführte Schmiermittel zwischengelagert wird. Von dort wird das verbrauchte Schmiermittel mittels einer Förderpumpe 21 über eine Leitung 22 dem Luftfilter 13 zugeführt, wodurch das verbrauchte Schmiermittel mit dem Brennstoff vermischt in die Zylinderräume der Brennkraftmaschine 1 eingespritzt wird. Die Leitung 22 kann aber auch mit der Kraftstoffrücklaufleitung in Verbindung stehen, in welche dann das verbrauchte Schmiermittel eingedüst wird.

Die Pumpe 21 wird über das Brennstoffpedal 14 gesteuert, wie dies durch die strichlierte Linie 23 angedeutet ist. Diese Steuerung kann beispielsweise dadurch erfolgen, daß die Pumpe 21 elektrisch angetrieben wird und daß in der Stromleitung zur Pumpe ein durch das Brennstoffpedal 14 betätigter elektrischer Schalter angeordnet ist. Dadurch wird sichergestellt, daß nur dann verbrauchtes Schmiermittel dem einzuspritzenden Brennstoff beigemengt wird, wenn das Brennstoffpedal 14 betätigt wird. Eine Beimengung dieses verbrauchten Schmieröles im Leerlauf ist dadurch ausgeschlossen.

Anstelle der Steuerung der Förderpumpe 21 über das Brennstoffpedal 14 oder zusätzlich hiezu kann auch eine Steuerung der Förderpumpe 21 in Abhängigkeit von der Drehzahl der Brennkraftmaschine 1 über einen nicht dargestellten Drehzahlmesser in dem Sinne vorgenommen werden, daß erst nach Erreichen einer bestimmten Drehzahl die Förderpumpe 21 eingeschaltet und dadurch verbrauchtes Schmiermittel aus dem Zwischenbehälter 20 zur Brennstoffzuführung 10 gefördert wird.

Die von der Druckmeßeinrichtung 7, der Durchflußmengereinrichtung 8 und der Mengenmeßeinrichtung 8' gemessenen Werte werden beispielsweise in elektrische Größen umgesetzt und über Leitungen 24, 25, 26 einer vorzugsweise von einem Mikroprozessor gebildeten Steuerungseinrichtung 27 zugeführt. In diese Steuerungseinrichtung 27 können noch weitere Werte eingegeben werden, beispielsweise über eine Leitung 28 die verbrauchte Treibstoffmenge pro Zeiteinheit, welche mit einer Durchflußmengenmeßeinrichtung 29 gemessen wird, über eine Leitung 30 die Betriebsdauer der Brennkraftmaschine 1, welche mit einer nicht dargestellten Zeitmeßeinrichtung gemessen wird, oder über eine Leitung 31 die von der Brennkraftmaschine 1 abgegebene Leistung, welche über eine nicht dargestellte Leistungsmeßeinrichtung gemessen wird.

Schließlich können in die Steuerungseinrichtung verschiedene Kenngrößen manuell eingegeben werden, wie dies durch die Hebel 32 dargestellt ist, welche beispielsweise drei Stellungen einnehmen können. Hiedurch ist es möglich, beispielsweise eine die Legierung des Schmiermittels charakterisierende Größe oder eine den verwendeten Treibstoff, insbesondere den Schwefelgehalt desselben, charakterisierende Größe in die Steuerungseinrichtung 27 einzugeben. Zusätzlich oder anstelle dieser Größen kann noch eine manuelle Eingabe der äußeren Betriebsbedingungen des durch die Brennkraftmaschine 1 angetriebenen Kraftfahrzeuges, beispielsweise der Betriebsart, des Ladegewichtes, der Fahrbahnbeschaffenheit usw. vorgenommen werden.

Die Steuerungseinrichtung 27 steuert die Absperrorgane 17 und 19, also die Zufuhr von frischem Schmiermittel aus dem Schmiermitteltank 16 und die Abfuhr von verbrauchtem Schmiermittel in den Zwischenbehälter 20. Dadurch wird einerseits sichergestellt, daß der natürliche Abgang des Schmiermittels während des Betriebes der Brennkraftmaschine 1 stets ersetzt wird, so daß die erforderliche Schmiermittelmenge immer bereit steht, andererseits zu einem vorbestimmten Zeitpunkt, welcher in Abhängigkeit von den Eingangsgrößen der Steuerungseinrichtung 27 von dieser bestimmt wird, das Schmiermittel teilweise oder vollständig erneuert wird, dadurch, daß durch Öffnen des Absperrorganes 19 das verbrauchte Schmiermittel abgeführt und durch Öffnen des Absperrorganes 17 neues Schmiermittel zugeführt wird. Die Steuerungseinrichtung 27 steuert weiters eine Alarmeinrichtung 33, welche dann anspricht, wenn beispielsweise durch plötzlichen Druckabfall in der Kreislaufleitung 3 oder durch plötzliche Abnahme der Schmiermittelmenge ein weiterer Betrieb der Brennkraftmaschine 1 zu einer Beschädigung derselben führen würde. Ein solcher Zustand kann beispielsweise bei einem Versagen der Schmiermittelpumpe 4, bei einem Verlegen des Hauptstromfilters 5 oder bei einer undichten Stelle in der Kreislaufleitung 3 eintreten.

Zweckmäßig ist der Schmiermitteltank 16 mit einem Schauglas 34 oder einer sonstigen Mengenanzeige versehen, so daß der Inhalt des Schmiermittels festgestellt werden kann. Selbstverständlich ist auch eine Fernanzeige ähnlich wie der bei Brennstofftanks verwendete Fernanzeige möglich.

## Patentansprüche

1. Verfahren zur Steuerung des Schmiersystems von Brennkraftmaschinen (1), insbesondere von Einspritzbrennkraftmaschinen, wobei das Schmiermittel im Kreislauf aus einem Sammelsystem, beispielsweise einer Ölwanne (2), mittels einer Pumpe (4) über wenigstens einen Filter (5, 6) den Schmierstellen der Brennkraftmaschine (1) zugeführt und von dort in den Sammelraum zurückgeleitet wird, wobei die Menge des Schmiermittels an zumindest einer Stelle des Schmiermittelkreislaufes ermittelt und der ermittelte Wert einer Steuerungseinrichtung (27) eingegeben wird, über welche die Zufuhr von neuem Schmiermittel gesteuert wird, und wobei verbrauchtes Schmiermittel aus dem Schmiermittelkreislauf entnommen und zunächst gesammelt und dann dem Kraftstoff der Brennkraftmaschine (1) beigemengt wird, dadurch gekennzeichnet, daß das über die Steuerungseinrichtung (27) entnommene und gesammelte verbrauchte Schmiermittel dem Kraftstoff (27) entnommene und gesammelte verbrauchte Schmiermittel dem Kraftstoff der Brennkraftmaschine beigemengt wird, wenn das Brennstoffpedal (14) betätigt und-/oder eine bestimmte Drehzahl erreicht ist.

2. Verfahren nach Anspruch 1, dadurch gekennzeichnet, daß das entnommene verbrauchte Schmiermittel in den mit der Kraftstoffzuführungsleitung (12) verbundenen Luftansaugstutzen (13) eingesprüht wird.

3. Verfahren nach Anspruch 1 oder 2, dadurch gekennzeichnet, daß der Druck des Schmiermittels an zumindest einer Stelle im Schmiermittelkreislauf gemessen wird, und daß der gemessene Wert in die Steuerungseinrichtung (27) eingegeben wird.

4. Verfahren nach einem der Ansprüche 1 bis 3, dadurch gekennzeichnet, daß die verbrauchte Kraftstoffmenge pro Zeiteinheit und/oder die Betriebsdauer und/oder die abgegebene Leistung der Brennkraftmaschine gemessen werden und daß die gemessenen Werte zusätzlich in die Steuerungseinrichtung (27) eingegeben werden.

5. Verfahren nach einem der Ansprüche 1 bis 4, dadurch gekennzeichnet, daß eine die Zusammensetzung, insbesondere den Schwefelgehalt, des verwendeten Kraftstoffes charakterisierende Größe in die Steuerungseinrichtung (27) eingegeben wird.

6. Verfahren nach einem der Ansprüche 1 bis 5, dadurch gekennzeichnet, daß eine die Zusammensetzung, insbesondere die Legierung, des Schmiermittels charakterisierende Größe in die Steuerungseinrichtung (27) eingegeben wird.

7. Verfahren nach einem der Ansprüche 1 bis 6, dadurch gekennzeichnet, daß bei Verwendung der Brennkraftmaschine für den Antrieb eines Kraftfahrzeuges die die äußeren Betriebsbedingungen des Kraftfahrzeuges charakterisierenden Werte, wie Betriebsart, Ladegewicht und/oder Beschaffenheit der befahrenen Fläche, in die Steuerungseinrichtung (27) eingegeben werden.

8. Vorrichtung zur Durchführung des Verfahrens nach einem der Ansprüche 1 bis 7, bei welcher die Ölwanne (2) einer Brennkraftmaschine (1) über eine Kreislaufleitung (3), in der eine Schmiermittelpumpe (4) und wenigstens ein Filter (5, 6) angeordnet sind, mit den Schmierstellen der Brennkraftmaschine (1) verbunden ist, von wo das Schmiermittel zur Ölwanne (2) zurückfließt, die über eine Schmiermittelzuführungsleitung (15) mit einem ein neues Schmiermittel enthaltenden Schmiermitteltank (16) verbunden ist, in welcher Schmiermittelzuführungsleitung (15) ein von einer Steuerungseinrichtung (27) gesteuertes Absperrorgan (17) vorgesehen ist, welche Steuerungseinrichtung (27) mit einer Mengenmeßvorrichtung (8') in der Ölwanne (2), vorzugsweise mittels eines elektrischen Kabels (26), in Wirkverbindung steht, wobei weiters eine Schmiermittelabführungsleitung (18), in der gleichfalls ein Absperrorgan (19) vorgesehen ist, mit der Brennstoffzuführung (10) zur Brennkraftmaschine in Verbindung steht, und wobei in der Schmiermittelabführungsleitung (18, 22) ein Zwischenbehälter (20) und in Förderrichtung nach dem Zwischenbehälter (20) eine Förderpumpe (21) vorgesehen sind, dadurch gekennzeichnet, daß die Förderpumpe (21) von einem Drehzahlmesser der Brennkraftmaschine und/oder vom Brennstoffpedal (14) derart gesteuert ist, daß erst bei Betätigung des Brennstoffpedals (14) und/oder erst nach Erreichen einer bestimmten Drehzahl die Förderpumpe eingeschaltet wird.

9. Vorrichtung nach Anspruch 8, dadurch gekennzeichnet, daß die Schmiermittelabführungsleitung (22) in einen mit der Kraftstoffzuführungsleitung (12) verbundenen Luftansaugstutzen (13) mündet.

10. Vorrichtung nach Anspruch 8 oder 9, dadurch gekennzeichnet, daß die Steuerungseinrichtung (27) auch das in der Schmiermittelabführungsleitung (18, 22) angeordnete Absperrorgan (19) steuert.

11. Vorrichtung nach einem der Ansprüche 8 bis 10, dadurch gekennzeichnet, daß in der Kreislaufleitung (3) eine Druckmeßeinrichtung (7) und/oder eine Durchflußmengenmeßeinrichtung (8) vorgesehen sind, welche Meßeinrichtungen, vorzugsweise mittels elektrischer Kabel (24, 25), mit der Steuerungseinrichtung (27) in Wirkverbindung stehen.

12. Vorrichtung nach einem der Ansprüche 8 bis 11, dadurch gekennzeichnet, daß eine Einrichtung (29) zur Messung des Treibstoffverbrauches der Brennkraftmaschine (1) pro Zeiteinheit und/oder eine Einrichtung zur Messung der Betriebsdauer der Brennkraftmaschine (1) und/oder eine Einrichtung zur Messung der abgegebenen Leistung vorgesehen sind, und daß diese Einrichtungen über die Meßwerte übertragende Leitungen mit der Steuerungseinrichtung (27) verbunden sind.

13. Vorrichtung nach einem der Ansprüche 8 bis 12, dadurch gekennzeichnet, daß die Steuerungseinrichtung (27) eine Alarmeinrichtung (33) steuert.

14. Vorrichtung nach einem der Ansprüche 8 bis 13, dadurch gekennzeichnet, daß eine elektronische Steuerungseinrichtung (27) vorgesehen ist.

15. Vorrichtung nach einem der Ansprüche 8 bis 14, dadurch gekennzeichnet, daß der Schmiermitteltank (16) mit einer Mengenanzeige, beispielsweise einem Schauglas (34), versehen ist.

## Claims

1. A process for the control of a lubricating system of internal combustion engines (1), in particular of injection-type internal combustion engines, the lubricant being circulated from a collecting system, for instance an oil sump (2), by means of a pump (4) via at least one filter (5, 6) to the lubricating points of the internal combustion engine (1) and from there returned to the collecting space, the amount of lubricant being determined in at least one location of the lubricant cycle and the value determined being input into a control means (27) via which the supply of fresh lubricant is controlled, spent lubricant being withdrawn from the lubricant cycle, first collected and then added to the fuel of the internal combustion engine (1), characterized in that the spent fuel withdrawn and collected via the control means (27) is admixed to the fuel of the internal combustion engine when the fuel pedal (14) is actuated and/or a certain number of revolutions per minute is reached.

2. The process according to claim 1, characterized in that the spent lubricant withdrawn is injected into the air intake (13) connected to the fuel supply line (12)..

3. The process according to claim 1 or 2, characterized in that the pressure of the lubricant is measured in at least one location in the lubricant cycle and that the value of the pressure measured is input into the control means (27).

4. The process according to any one of the claims 1 to 3, characterized in that the amount of spent fuel per unit of time and/or the operating period and/or the performance output of the internal combustion engine is measured and that the values measured are additionally input into the control means (27).

5. The process according to any one of the claims 1 to 4, characterized in that a value characterizing the composition, in particular the sulfur content, of the fuel used is input into the control means (27).

6. The process according to any one of the claims 1 to 5, characterized in that a value characterizing the composition, in particular the doping, of the lubricant is input into the control means (27).

7. The process according to any one of the claims 1 to 6, characterized in that when using the internal combustion engine for driving a motor vehicle, the values characterizing the external operating conditions of the motor vehicle, such as type of operation, carrying capacity and/or nature of the surface driven on, are input into the control means (27).

8. A device for performing the process according to any one of the claims 1 to 7, in which the oil sump (2) of an internal combustion engine (1) is connected to the lubricating points of the internal combustion engine (1) via a circulating line (3) in which a lubricant pump (4) and at least one filter (5, 6) are arranged, the lubricant flowing back from the lubricating points to the oil sump (2) which is connected via a lubricant feed line (15) to a lubricant tank (16) containing fresh lubricant, in which lubricant feedline (15) a shut-off organ (17) controlled by a control means (27) is provided, said control means (27) being functionally connected to a volumeter (8') in the oil sump (2), preferably by means of an electric cable (26), a lubricant discharge line (18) in which a shut-off organ (19) is provided being connected to the fuel inlet (10) to the internal combustion engine and the lubricant discharge line (18, 22) being provided with an intermediate container (20) and in conveying direction downstream of the intermediate container (20) with a feed pump (21), characterized in that the feed pump (21) is controlled by the tachometer of the internal combustion engine and/or by the fuel pedal (14) in such a manner that it is not switched on until the fuel pedal (14) is actuated and/or a certain number of revolutions per minute is reached.

9. The device according to claim 8, characterized in that the lubricant discharge line (22) terminates in an air intake (13) connected to the fuel supply line (12).

10. The device according to claim 8 or 9, characterized in that the control means (27) also controls the shut-off organ (19) arranged in the lubricant discharge line (18, 22).

11. The device according to any one of the claims 8 to 10, characterized in that a pressure gauge (7) and/or a flow meter (8) are provided in the circulating line (3), which measuring means are functionally connected to the control means (27), preferably by means of electric cables (24, 25).

12. The device according to any one of the claims 8 to 11, characterized in that a means (29) for measuring the fuel consumption of the internal combustion engine (1) per unit of time and/or a means for measuring the operating period of the internal combustion engine (1) and/or a means for measuring the performance output are provided and that said means are connected to the control means (27) via lines transmitting the measuring values.

13. The device according to any one of the claims 8 to 12, characterized in that the control means (27) controls an alarm means (33).

14. The device according to any one of the claims 8 to 13, characterized in that an electronic control means (27) is provided.

15. The device according to any one of the claims 8 to 14, characterized in that the lubricant tank (16) is provided with a volume indicator, for instance a viewing glass (34).

**Revendications**

1. Procédé de commande d'un système de graissage pour des moteurs à combustion interne (1), en particulier pour des moteurs à injection, le lubrifiant étant circulé d'un système collecteur, par exemple une cuvette-carter à huile (2), à l'aide d'une pompe (4) par au moins un filtre (5, 6), aux points de graissage du moteur à combustion interne (1) et de là retourné à l'espace collecteur, le débit de lubrifiant étant déterminé en au moins un lieu du cycle de graissage et la valeur déterminée étant entrée dans un moyen de commande (27) commandant l'alimentation en nouveau lubrifiant, le lubrifiant usé étant retiré du cycle de graissage, d'abord collecté et puis mêlé au carburant du moteur à combustion interne (1), caractérisé en ce que le lubrifiant retiré et collecté par le moyen de commande (27) est mêlé au carburant du moteur à combustion interne (1) si la pédale de carburant (14) est actionnée et/ou un certain nombre de tours est atteint.

2. Procédé selon la revendication 1, caractérisé en ce que le lubrifiant usé et retiré est injecté dans le tube d'aspiration d'air (13) relié à la conduite d'alimentation du carburant (12).

3. Procédé selon la revendication 1 ou 2, caractérisé en ce que la pression du lubrifiant est mesurée en au moins un lieu du cycle de graissage et que la valeur mesurée est entrée dans le moyen de commande (27).

4. Procédé selon une des revendications 1 à 3, caractérisé en ce que le débit de carburant usé est mesuré par unité de temps et/ou durée de service et/ou puissance délivrée du moteur à combustion interne et que les valeurs mesurées sont additionnellement entrées dans le moyen de commande (27).

5. Procédé selon une des revendications 1 à 4, caractérisé en ce qu'une valeur caractérisant la composition, en particulier la teneur en soufre, du carburant utilisé, est entrée dans le moyen de commande (27).

6. Procédé selon une des revendications 1 à 5, caractérisé en ce qu'une valeur caractérisant la composition, en particulier l'état doté, du lubrifiant est entrée dans le moyen de commande (27).

7. Procédé selon une des revendications 1 à 6, caractérisé en ce qu'en utilisant le moteur à combustion interne pour la commande d'un véhicule automobile, les valeurs caractérisant les conditions opératoires externes du véhicule automobile comme mode opératoire, capacité de charge et/ou qualité de la surface passée, sont entrées dans le moyen de commande (27).

8. Dispositif pour exécuter le procédé selon une des revendications 1 à 7, dans lequel la cuvette-carter à huile (2) d'un moteur à combustion interne (1) est reliée aux points de graissage du moteur à combustion interne (1) par l'intermédiaire d'une conduite de circulation (3) pourvue d'une pompe de lubrifiant (4) et d'au moins un filtre (5, 6), le lubrifiant retournant des points de graissage à la cuvette-carter à huile (2) qui est reliée par une conduite d'alimentation (15) de lubrifiant à un réservoir de lubrifiant (15) contenant du nouveau lubrifiant, la conduite d'alimentation (15) de lubrifiant étant pourvue d'un organe d'arrêt (17) commandé par le moyen de commande (27), le moyen de commande (27) étant relié activement à un débitmètre (8') dans la cuvette-carter à huile (2), de préférence au moyen d'un câble électrique (26), une conduite de sortie (18) du lubrifiant dans laquelle un organe d'arrêt (19) est également pourvu étant reliée à l'alimentation (10) du carburant au moteur à combustion interne et la conduite de sortie (18, 22) du lubrifiant étant pourvue d'un réservoir intermédiaire (20) et, en aval du réservoir intermédiaire (20) en direction du transport, d'une pompe d'alimentation (21), caractérisé en ce que la pompe d'alimentation (21) est commandée par un tachymètre du moteur à combustion interne et/ou par la pédale de carburant (14) de manière que la pompe d'alimentation n'est actionnée qu'au moment de l'actionnement de la pédale de carburant (14) et/ou quand un certain nombre de tours est atteint.

9. Dispositif selon la revendication 8, caractérisé en ce que la conduite de sortie (22) du lubrifiant débouche dans un tube d'aspiration d'air (13) relié à la conduite d'alimentation du carburant (12).

10. Dispositif selon une des revendications 8 ou 9, caractérisé en ce que le moyen de commande (27) commande également l'organe d'arrêt (19) pourvu dans la conduite de sortie (18, 22) du lubrifiant.

11. Dispositif selon une des revendications 8 à 10, caractérisé en ce qu'un manomètre (7) et/ou un débitmètre (8) sont pourvus dans la conduite de circulation (3), lesdits moyens de mesurage étant reliés activement, de préférence au moyen de câbles électriques (24, 25), au moyen de commande (27).

12. Dispositif selon une des revendications 8 à 11, caractérisé en ce qu'un moyen (29) pour mesurer la consommation du carburant du moteur à combustion interne (1) par unité de temps et/ou un moyen pour mesurer la durée de service du moteur à combustion interne (1) et/ou un moyen pour mesurer la puissance délivrée sont pourvus et que lesdits moyens sont reliés au moyen de commande (27) par l'intermédiaire des conduites transmettant les valeurs mesurées.

13. Dispositif selon une des revendications 8 à 12, caractérisé en ce que le moyen de commande (27) commande un avertisseur (33).

14. Dispositif selon une des revendications 8 à 13, caractérisé en ce qu'un moyen de commande (27) électronique est pourvu.

15. Dispositif selon une des revendications 8 à 14, caractérisé en ce que le réservoir (16) du lubrifiant est pourvu d'un indicateur de débit, par exemple un verre indicateur (34).